# EUROPÄISCHE PATENTANMELDUNG

(11) **EP 4 678 428 A1**
(43) Veröffentlichungstag der Anmeldung: **14.01.2026**
(21) Anmeldenummer: 24188240.6
(22) Anmeldetag: 12.07.2024
(51) Int. Cl.: B60F 1/04, B60G 7/04, B60G 17/06, E02F 9/02

(54) **BAGGER**

(71) Anmelder: Kaiser Aktiengesellschaft, 9486 Schaanwald (LI)
(72) Erfinder: Geiger, René, 9434 Au (CH); Willi, Albert, 9658 Wildhaus (CH); Laubscher, Daniel, 8880 Walenstadt (CH)
(74) Vertreter: Torggler & Hofmann Patentanwälte - Rankweil

(57) **Zusammenfassung**

Bagger (1) dessen Oberwagen (2) drehbar auf einem Unterwagen (3) gelagert ist, wobei der Unterwagen (3) ein Fahrgestell (6) aufweist, an dem an zwei Längsseiten jeweils zumindest zwei Laufräder (7) zum Befahren eines Untergrunds (8) gelagert sind, wobei der Unterwagen (3) zusätzlich zumindest zwei Schienenradträger (9) aufweist, wobei an den Schienenradträgern (9) jeweils einander gegenüberliegend zumindest zwei Schienenräder (10) zur Befahrung von Eisenbahnschienen (22) gelagert sind und die Schienenradträger (9) jeweils über eine Radträgeraufhängung (11) relativ zum Fahrgestell (6) anhebbar und absenkbar am Fahrgestell (6) gelagert sind und Kompensationsvorrichtungen (12) eine, vom jeweiligen oberen Anschlag (13) und vom jeweiligen unteren Anschlag (14) begrenzte, durch äußere Kräfte bewirkte relative Vertikalbewegung zwischen dem jeweiligen Schienenradträger (9) und dem Fahrgestell (6) ermöglichen, wobei die Radträgeraufhängungen (11) jeweils zumindest eine, in Abhängigkeit zumindest eines Betriebsparameters des Baggers (1) in ihrer Dämpfungswirkung geregelte Dämpfungseinrichtung (15) zur Dämpfung der relativen Vertikalbewegung aufweisen. (Fig. 4)

## Beschreibung

Bagger dieser Art können mit ihren Laufrädern auf verschiedenen Arten von Untergrund, wie z.B. einer Straße, einer Baustellenoberfläche oder dergleichen fahren. Zusätzlich weisen solche Bagger aber auch Schienenräder auf, mit denen sie auf Eisenbahnschienen fahren können. Diese Bagger werden häufig bei der Instandsetzung und/oder beim Bau von Gleisanlagen eingesetzt. Sie müssen daher auch auf Eisenbahnschienen fahren können, welche nicht optimal verlegt und ausgerichtet sind. Ein Problem ist dabei, dass insbesondere Unebenheiten in den Eisenbahnschienen dazu führen können, dass der Bagger mit seinen Schienenrädern entgleist. Um dies zu verhindern, schlägt die gattungsgemäße EP 3 942 116 B1 eine Kompensationsvorrichtung vor, welche eine freie vertikale Verschiebung des Fahrgestells relativ zum Schienenradträger zulässt.

Aufgabe der Erfindung ist es, einen Bagger der eingangs genannten Art demgegenüber weiter zu verbessern.

Hierfür schlägt die Erfindung einen Bagger gemäß Patentanspruch 1 vor.

Es ist somit erfindungsgemäß vorgesehen, dass die Radträgeraufhängungen jeweils zumindest eine, in Abhängigkeit zumindest eines Betriebsparameters des Baggers in ihrer Dämpfungswirkung geregelte Dämpfungseinrichtung zur Dämpfung der relativen Vertikalbewegung zwischen dem jeweiligen Schienenradträger und dem Fahrgestell aufweisen.

Im Zuge der Erfindung wurde erkannt, dass die im gattungsgemäßen Stand der Technik genannte freie vertikale Verschiebung des Fahrgestells relativ vom Schienenradträger zu unkontrollierten, meist plötzlichen Bewegungen des Baggers führen kann, wenn dieser z.B. durch Drehen des Oberwagens relativ zum Unterwagen oder durch Bewegungen des Baggerarms oder durch verschiedenartige Lastwechsel am Baggerarm eine plötzliche Schwerpunktverschiebung erfährt. Mit der im genannten Stand der Technik realisierten freien vertikalen Verschiebung kann es hierdurch, wie auch durch entsprechend starke Unebenheiten in den, vom Bagger befahrenen Eisenbahnschienen zu unkontrollierten Bewegungen des Baggers kommen. Dies kann im Extremfall auch zum Entgleisen des Baggers führen. Durch die erfindungsgemäß vorgesehene geregelte Dämpfungseinrichtung werden solche unerwünschten abrupten Bewegungen innerhalb des Baggers oder des gesamten Baggers verhindert, da mit der geregelten Dämpfungseinrichtung die relative Vertikalbewegung zwischen dem jeweiligen Schienenradträger und dem Fahrgestell gezielt gedämpft werden kann.

Bevorzugt ist vorgesehen, dass die Dämpfungseinrichtung während des Betriebs des Baggers immer eine Mindestdämpfung der relativen Vertikalbewegung zwischen dem jeweiligen Schienenradträger und dem Fahrgestell entgegensetzt. Dies bedeutet, dass also die Dämpfungseinrichtung während des Betriebs des Baggers immer, also permanent, für eine gewisse, von Null verschiedene, Dämpfung der genannten relativen Vertikalbewegung sorgt.

Besonders bevorzugte Varianten sehen vor, dass die relative Vertikalbewegung zwischen dem jeweiligen Schienenradträger und dem Fahrgestell mittels der Dämpfungseinrichtung vollständig sperrbar ist. So kann der Bagger insbesondere dann besonders stabil auf den Eisenbahnschienen gelagert werden, wenn er nicht fährt, sondern im Stand z.B. mit dem Baggerarm andere Arbeiten verrichtet.

Als geregelte Dämpfungseinrichtung kommen zur Realisierung der Erfindung unterschiedliche, beim Stand der Technik an sich bekannte Dämpfungseinrichtungen in Frage. Es kann sich z.B. um elektrisch betriebene Dämpfungseinrichtungen wie z.B. entsprechende Elektromotoren oder dergleichen handeln. Auch rein mechanische Lösungen sind denkbar, solange die Dämpfungseinrichtung entsprechend in ihrer Dämpfungswirkung geregelt werden kann. Besonders bevorzugte Varianten sehen aber vor, dass die Dämpfungseinrichtung eine hydraulische oder pneumatische Kolben-Zylinder-Einheit ist. Solche Kolben-Zylinder-Einheiten können durch eine entsprechende Druckregelung, wie an sich bekannt, besonders gut in ihrer Dämpfungswirkung geregelt werden.

Die Regelung der Dämpfungseinrichtung kann grundsätzlich in Abhängigkeit eines einzigen, aber auch in Abhängigkeit von mehreren Betriebsparametern des Baggers erfolgen. Z.B. kann vorgesehen sein, dass der oder einer der Betriebsparameter zur Regelung der Dämpfungseinrichtung eine, mit einem Geschwindigkeitssensor bestimmte, Momentangeschwindigkeit des Unterwagens ist. Der oder einer der Betriebsparameter zur Regelung der Dämpfungseinrichtung kann also schlichtweg die Geschwindigkeit sein, mit der der Unterwagen und damit der Bagger momentan bewegt wird. Ein anderer Betriebsparameter, welcher zur genannten Regelung herangezogen werden kann, ist aber z.B. auch die momentane relative Stellung des Oberwagens zum Unterwagen. Insofern können erfindungsgemäße Beispiele auch vorsehen, dass der oder einer der Betriebsparameter zur Regelung der Dämpfungseinrichtung ein, mit einem Drehwinkelerkennungssensor bestimmter, momentaner Drehwinkel ist, um welchen der Oberwagen um die Drehachse relativ zum Unterwagen gedreht ist. In bevorzugten Varianten wird aber auch zur Regelung der Dämpfungseinrichtung abgefragt, wie der Baggerarm momentan relativ zum Oberwagen ausgerichtet ist. In diesem Sinne ist bevorzugt vorgesehen, dass der oder einer der Betriebsparameter zur Regelung der Dämpfungseinrichtung eine, mit zumindest einem Auslenkungssensor bestimmte, momentane Auslenkung des Baggerarms relativ zum Oberwagen ist. Umfasst der Baggerarm nur ein Baggerarmglied, so reicht ein Auslenkungssensor aus, um die Stellung des Baggerarms relativ zum Oberwagen zu bestimmen. In der Regel sind Baggerarme aber mehrgliedrig aufgebaut, wobei die einzelnen Glieder des Baggerarms relativ zueinander bewegt werden können. In solchen Ausgestaltungsformen wird bevorzugt eine entsprechende Anzahl von Auslenkungssensoren verwendet, um die momentane Auslenkung des Baggerarms relativ zum Oberwagen zu bestimmen. Bevorzugt wird dabei auch durch entsprechende Auslenkungssensoren die momentane Position des am Baggerarm befestigten Werkzeugs, wie z.B. einer Baggerschaufel oder dergleichen, mit in die Regelung mit einbezogen.

Neben der momentanen Auslegung des Baggerarms relativ zum Oberwagen kann es aber auch interessant sein, die momentane Belastung oder in anderen Worten auf den Baggerarm einwirkende Last, mit bei der Regelung der Dämpfungseinrichtung zu berücksichtigen. In diesem Sinne sehen bevorzugte Ausgestaltungsformen der Erfindung vor, dass der oder einer der Betriebsparameter zur Regelung der Dämpfungseinrichtung eine, mit zumindest einem Lastsensor bestimmte, momentan auf den Baggerarm einwirkende Last ist. Der Lastsensor kann z.B. ein in einen hydraulischen Antriebszylinder des Baggerarms integrierter Drucksensor sein, mit dem die momentane Last am Baggerarm gemessen werden kann.

Besonders bevorzugte Varianten der Erfindung sehen vor, dass der oder einer der Betriebsparameter zur Regelung der Dämpfungseinrichtung eine momentane Position des Schwerpunkts des Baggers ist. Um die momentane Position des Schwerpunkts des Baggers bestimmen zu können, sehen bevorzugte Varianten der Erfindung vor, dass entsprechende Messdaten von oben genannten Drehwinkelerkennungssensoren, Auslenkungssensoren und Lastsensoren zusammen ausgewertet werden, um so die momentane Position des Schwerpunkts des Baggers zu bestimmen und dies zur Regelung der genannten Dämpfungseinrichtung heranzuziehen.

Wie eingangs bereits angedeutet, muss der Bagger mit seinen Laufrädern sehr unterschiedliche Arten von Oberflächen bzw. von Untergrund befahren können. Dies können Straßen sein. Dies können aber auch Schotter, Kies oder andere z.B. auch mit Erde bedeckte Oberflächen sein. Um hier möglichst flexibel zu sein, sehen bevorzugte Ausgestaltungsformen der Laufräder auch vor, dass die Laufräder jeweils eine Luftbereifung aufweisen. Auch dies ist an sich bekannt und muss nicht weiter erläutert werden. Laufräder können einzelne Laufräder aber auch Zwillingsreifen, Drillingsreifen oder dergleichen sein.

Um mit seinen Laufrädern und auch den Schienenrädern selbstständig fahren zu können, weisen erfindungsgemäße Bagger, wie an sich bekannt, eine entsprechende Anzahl von Fahrantrieben auf. Diese können auch, wie beim Stand der Technik an sich bekannt, ausgeführt sein. Diese Fahrantriebe können z.B. Elektromotoren, aber auch hydraulische Motoren oder pneumatische Motoren oder auch Verbrennungsmotoren oder eine Kombination davon umfassen. Hierbei kann auf die gesamten, beim Stand der Technik an sich bekannten Varianten von geeigneten Fahrantrieben für den Bagger zurückgegriffen werden. Günstigerweise ist jedenfalls vorgesehen, dass zumindest eines der Laufräder zum Fahren des Baggers auf dem Untergrund oder auf den Eisenbahnschienen mittels zumindest eines Laufradfahrantriebs des Baggers antreibbar ist. Bevorzugt sind mehrere Laufräder des Baggers entsprechend mit einem oder mehreren Laufradfahrantrieben antreibbar. Besonders bevorzugt sind alle Laufräder des Baggers entsprechend mittels dem zumindest einen Laufradfahrantrieb antreibbar. Analoges gilt auch für die Schienenräder. So sehen bevorzugte Varianten vor, dass zumindest eines der, vorzugsweise alle, Schienenräder zum Fahren des Baggers auf den Eisenbahnschienen mittels zumindest eines Schienenradfahrantriebs des Baggers antreibbar ist bzw. sind. Auch für diese Schienenradfahrantriebe kann auf an sich bekannte Varianten von Fahrantrieben zurückgegriffen werden, wie dies bezüglich des Laufradfahrantriebs bereits erläutert wurde.

Erfindungsgemäße Bagger können in verschiedenen Fahrmodi zur Fortbewegung betrieben werden. Ein erster Fahrmodus kann z.B. darin bestehen, dass die Schienenräder entsprechend auf die Eisenbahnschienen abgesenkt und die Laufräder entsprechend über die Eisenbahnschienen und den Untergrund abgehoben sind, sodass der Bagger in diesem Fahrmodus nur mit den Schienenrädern auf den Eisenbahnschienen fährt. Andersherum weisen erfindungsgemäße Bagger in der Regel aber auch einen Fahrmodus auf, bei dem der Bagger ausschließlich mit den Laufrädern auf dem Untergrund oder sogar auf den Eisenbahnschienen steht und fährt. In diesem Fahrmodus sind dann die Schienenräder von den Eisenbahnschienen abgehoben.

Besonders bevorzugte Ausgestaltungsformen der Erfindung sehen aber vor, dass der Bagger auch einen Fahrmodus aufweist, bei dem sowohl die Laufräder als auch die Schienenräder auf den Eisenbahnschienen aufliegen und zum Fahren des Baggers auf den Eisenbahnschienen sowohl die Laufräder von dem bzw. zumindest einem Laufradfahrantrieb, als auch die Schienenräder von dem bzw. zumindest einem Schienenradfahrantrieb angetrieben sind. In diesem Fahrmodus wird der Bagger also sowohl über die Schienenräder als auch über die Laufräder angetrieben, indem beide Arten von Rädern direkt auf die Eisenbahnschienen einwirken. Dieser Fahrmodus entspricht einer Maschine der Kategorie 9C gemäß EN 15746. Durch den direkten Kontakt der Laufräder mit den Eisenbahnschienen kann eine höhere Zugkraft in diesem Fahrmodus übertragen werden. Dies kann besonders im Rangierbetrieb oder bei großen Höhenunterschieden von Vorteil sein.

Bevorzugte Varianten der Erfindung sehen vor, dass die jeweilige Radträgeraufhängung jeweils einen Zwischenträger aufweist, welcher zum Anheben und Absenken des jeweiligen Schienenradträgers relativ zum Fahrgestell, vorzugsweise mittels Schwenkbewegung, anhebbar und absenkbar am Fahrgestell gelagert ist. Bei solchen Ausgestaltungsformen ist somit vorgesehen, dass der jeweilige Zwischenträger vorzugsweise schwenkbar oder in anderer Art und Weise anhebbar und absenkbar am Fahrgestell befestigt ist, während der jeweilige Schienenradträger wiederum am Zwischenträger befestigt ist. In anderen Worten befindet sich bei solchen Ausgestaltungsformen also der Zwischenträger der Radträgeraufhängung zwischen dem Fahrgestell und dem jeweiligen Schienenradträger. Bevorzugte Varianten solcher Ausgestaltungen sehen dann vorzugsweise wiederum vor, dass der jeweilige Zwischenträger jeweils mittels eines Hub- und Senkantriebs, vorzugsweise mittels Schwenkbewegung, anhebbar und absenkbar am Fahrgestell gelagert ist. Durch Anheben und Absenken des Zwischenträgers relativ zum Fahrgestell wird dann natürlich automatisch auch der entsprechende Schienenradträger mit den entsprechenden Schienenrädern angehoben oder entsprechend abgesenkt. Besonders bevorzugt ist bei solchen Ausgestaltungsformen vorgesehen, dass der Zwischenträger mittels des Hub- und Senkantriebs auch in seiner Momentanposition relativ zum Fahrgestell arretierbar ist. In diesen arretierten Betriebszuständen kann der Zwischenträger dann eben nicht relativ zum Fahrgestell bewegt werden. Bei den Hub- und Senkantrieben können hierbei jeweils an sich bekannte Antriebe zum Einsatz kommen. Dies können elektrische Antriebe, aber z.B. auch pneumatische oder hydraulische Antriebe sein. Der Hub- und Senkantrieb kann z.B. auch als eine Kolben-Zylinder-Einheit ausgeführt sein.

Besonders bevorzugte Varianten der Erfindung sehen vor, dass der jeweilige Zwischenträger mittels der jeweiligen Kompensationsvorrichtung mit dem jeweiligen Schienenradträger verbunden ist. In anderen Worten wirkt die Kompensationsvorrichtung bei solchen Ausgestaltungsformen somit zwischen Schienenradträger und Zwischenträger und damit aber auch zwischen Schienenradträger und Fahrgestell. Das Gleiche gilt in bevorzugten Ausgestaltungsformen auch für die jeweilige geregelte Dämpfungseinrichtung. Günstigerweise ist bei bevorzugten Varianten der Erfindung also vorgesehen, dass der jeweilige Zwischenträger mittels der jeweiligen Dämpfungseinrichtung mit dem jeweiligen Schienenradträger verbunden ist. In solchen Ausgestaltungsformen wirkt die Dämpfungseinrichtung somit zwischen dem Zwischenträger und dem Schienenradträger und damit auch zwischen Fahrgestell und Schienenradträger. Zur bewegbaren Lagerung des Schienenradträgers am Zwischenträger sehen bevorzugte Varianten vor, dass der jeweilige Zwischenträger mittels zumindest eines Schwenkhebels mit dem jeweiligen Schienenradträger verbunden ist. Es kann sich auch um ein Paar von vorzugsweise parallel zueinander angeordneten Schwenkhebeln handeln. Der oder die Schwenkhebel sind jedenfalls günstigerweise sowohl am Schienenradträger als auch am jeweiligen Zwischenträger gelenkig und damit eben schwenkbar angeordnet. Grundsätzlich könnten anstelle der Schwenkhebel aber natürlich auch andere Verbindungen vorgesehen sein, welche eine entsprechende Relativbewegung zwischen Schienenradträger und Zwischenträger zum Einen zulassen und zum Anderen bevorzugt auch führen.

Die geregelte Dämpfungseinrichtung kann, wie eingangs bereits erläutert, sehr unterschiedlich ausgestaltet sein. So kann z.B. vorgesehen sein, dass die Dämpfung der relativen Vertikalbewegung zwischen dem jeweiligen Schienenradträger und dem Fahrgestell mittels der Dämpfungseinrichtung in Stufen regelbar ist. Genauso gut kann aber auch vorgesehen sein, dass die Dämpfung der relativen Vertikalbewegung zwischen dem jeweiligen Schienenradträger und dem Fahrgestell mittels der Dämpfungseinrichtung stufenlos regelbar ist.

Generell sei darauf hingewiesen, dass in den Ansprüchen und zum Teil auch in der Beschreibung jeweils von der Mindestanzahl der entsprechenden Merkmale bzw. Bauteile gesprochen wird. Alle hier genannten Merkmale und Bauteile können, soweit sinnvoll, aber auch in einer anderen Anzahl, insbesondere in einer größeren Anzahl als der genannten, bei erfindungsgemäßen Baggern zum Einsatz kommen. Zahlwörter wie ein, zwei, drei und dergleichen sind in diesem Sinne soweit es nicht sowieso explizit angegeben ist, auch im Sinne von zumindest ein, zumindest zwei, zumindest drei usw. zu verstehen.

Weitere Merkmale und Einzelheiten bevorzugter Ausgestaltungsformen der Erfindung werden nachfolgend anhand der Figurenbeschreibung exemplarisch erläutert. Es zeigen:
- Fig. 1 bis 3: einen erfindungsgemäßen Bagger in einer schematisierten Darstellung in drei verschiedenen Fahrmodi;
- Fig. 4: eine Detaildarstellung zum Unterwagen dieses Baggers aus den Fig. 1 bis 3;
- Fig. 5: eine zu Fig. 4 analoge Darstellung, wobei allerdings ein Schienenrad nicht dargestellt ist;
- Fig. 6: eine Frontalansicht auf den Unterwagen dieses Baggers beim Fahren auf eben verlegten Eisenbahnschienen;
- Fig. 7: eine zu Fig. 6 analoge Frontansicht, wobei der Unterwagen des Baggers aber auf uneben verlegten Eisenbahnschienen fährt;
- Fig. 8: eine analoge Darstellung zu Fig. 4 für die Situation gemäß Fig. 7 mit uneben verlegten Eisenbahnschienen;
- Fig. 9: eine Darstellung des Baggers aus den bisherigen Figuren, wobei diverse Sensoren schematisch eingezeichnet sind.

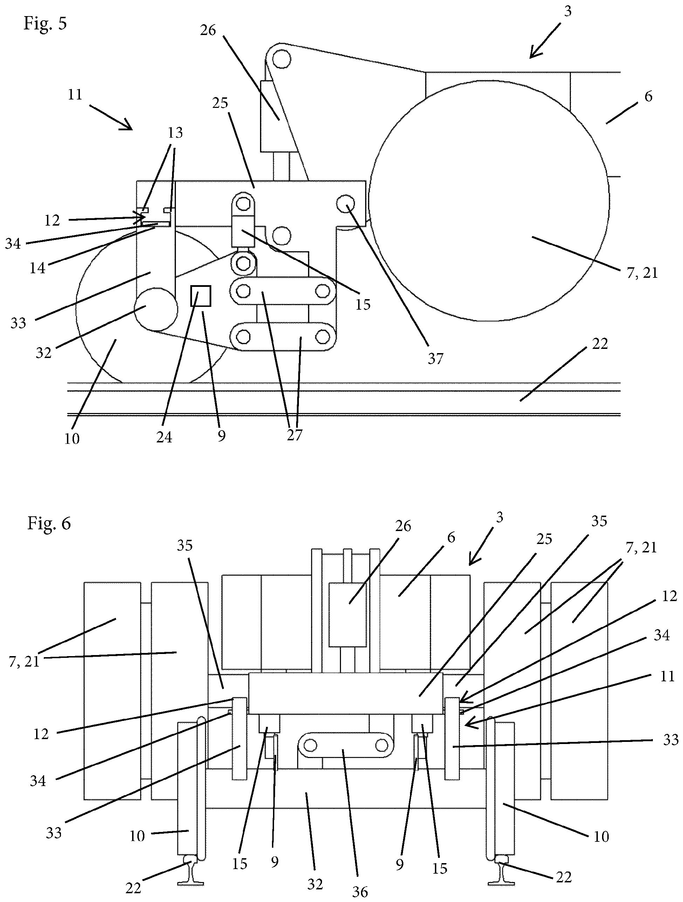

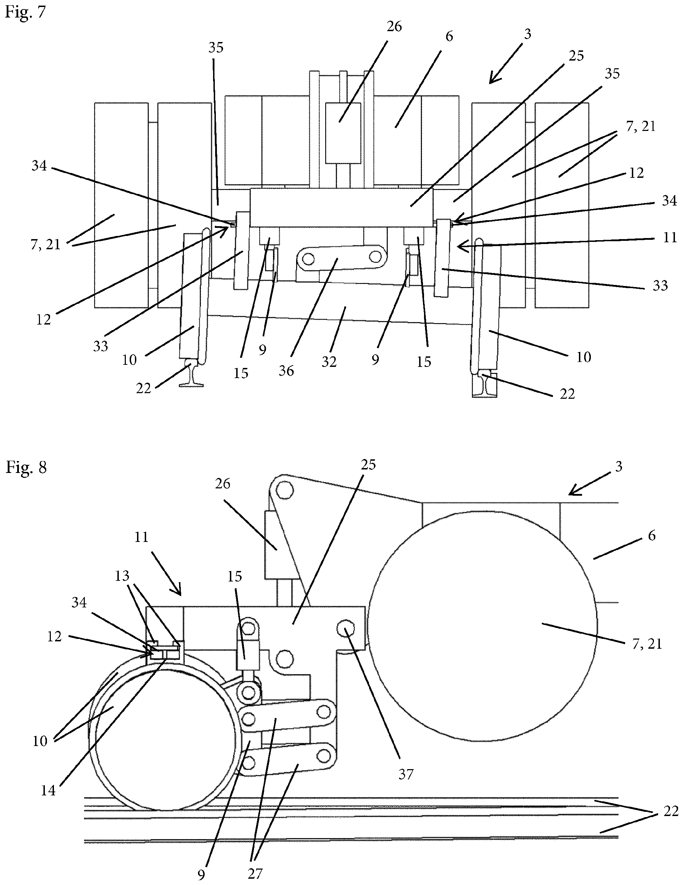

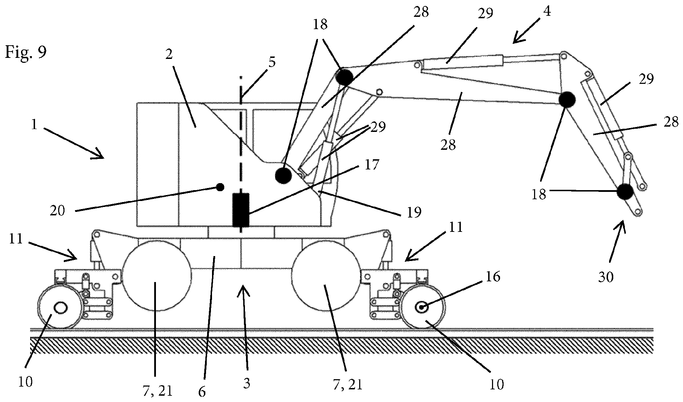

In den Figuren ist ein Ausführungsbeispiel eines erfindungsgemäßen Baggers 1 mit einem Oberwagen 2 und einem Unterwagen 3 sowie einem Baggerarm 4 gezeigt. Der Oberwagen 2 ist um eine, in Fig. 9 eingezeichnete, Drehachse 5 drehbar auf dem Unterwagen 3 gelagert. Der Baggerarm 4 ist relativ zum Oberwagen 2 bewegbar am Oberwagen 2 angelenkt. Der Unterwagen 3 weist ein Fahrgestell 6 auf, an dem an zwei einander gegenüberliegenden Längsseiten des Unterwagens 3 jeweils zumindest zwei Laufräder 7 zum Befahren eines Untergrunds 8 gelagert sind. Diese Laufräder 7 sind bevorzugt als Luftbereifung 21 ausgeführt. Die Laufräder 7 können jeweils als Einzelräder aber, wie in den Fig. 6 und 7 zu sehen, z.B. auch als Zwillingsräder ausgeführt sein.

Zusätzlich weist der Unterwagen 3 auf einander gegenüberliegenden Seiten vor und hinter dem Fahrgestell zumindest zwei Schienenradträger 9 auf, wobei an den Schienenradträgern 9 jeweils einander gegenüberliegend zumindest zwei Schienenräder 10 zur Befahrung von Eisenbahnschienen 22 gelagert sind. Wie in den nachfolgenden Figuren noch genauer gezeigt, sind die Schienenradträger 9 jeweils über eine Radträgeraufhängung 11 relativ zum Fahrgestell 6 anhebbar und absenkbar am Fahrgestell 6 gelagert. Die Radträgeraufhängungen 11 weisen jeweils zumindest eine Kompensationsvorrichtung 12 mit jeweils einem oberen Anschlag 13 und einem unteren Anschlag 14 auf, wobei die Kompensationsvorrichtung 12 eine vom jeweiligen oberen Anschlag 13 und vom jeweiligen unteren Anschlag 14 begrenzte, durch äußere Kräfte bewirkte, relative Vertikalbewegung zwischen dem jeweiligen Schienenradträger 9 und dem Fahrgestell 6 ermöglichen. All das wird weiter hinten noch anhand der nachfolgenden Figuren veranschaulicht und erläutert.

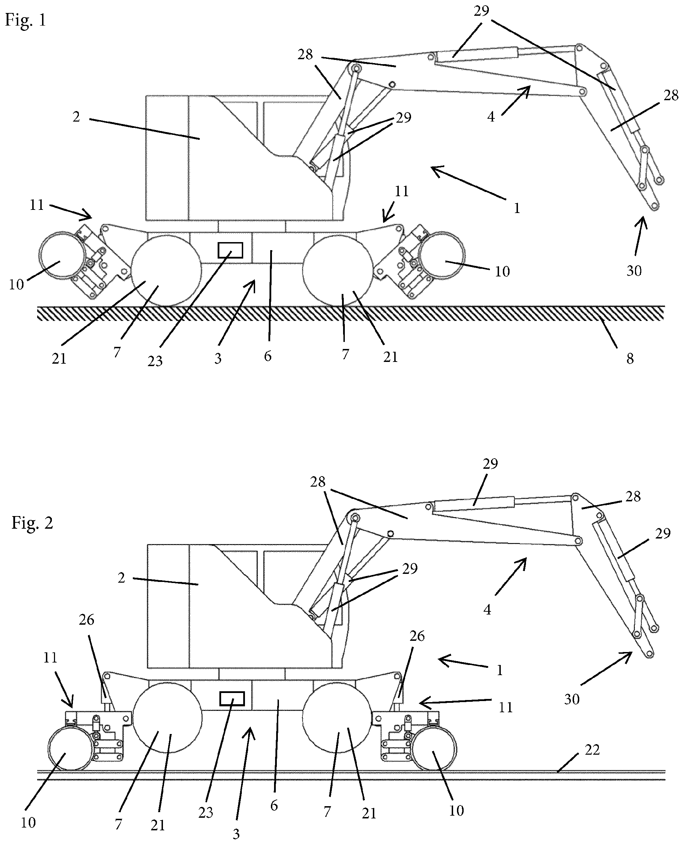

Zumindest eines der, vorzugsweise alle, Laufräder 7 sind zum Fahren des Baggers 1 auf dem Untergrund 8 oder auf den Eisenbahnschienen 22 mittels zumindest eines Laufradfahrantriebs 23 des Baggers 1 antreibbar. Der Laufradfahrantrieb 23 kann, wie an sich bekannt, ausgebildet sein und ist in den Fig. 1 bis 3 nur schematisch eingezeichnet. Zusätzlich ist in bevorzugten Varianten, wie den hier gezeigten, vorgesehen, dass zumindest eines der, vorzugsweise alle, Schienenräder 10 zum Fahren des Baggers 1 auf den Eisenbahnschienen 22 mittels zumindest eines Schienenradfahrantriebs 24 des Baggers 1 antreibbar ist bzw. sind. Auch solche Schienenradfahrantriebe 24 sind an sich bekannt und daher in Fig. 5 nur schematisiert eingezeichnet.

Der Baggerarm 4 kann aus einem einzigen Baggerarmglied 28 oder, wie hier realisiert, aus einer Abfolge von mehreren Baggerarmgliedern 28 bestehen. Sind mehrere Baggerarmglieder 28 vorhanden, so können die Baggerarmglieder 28 untereinander und relativ zum Oberwagen 2 durch entsprechende Antriebszylinder 29 bewegt, vorzugsweise verschwenkt, werden. Auch dies ist an sich bekannt und muss nicht weiter erläutert werden.

Am, vom Oberwagen 2 abgewandten Ende des Baggerarms 4 befindet sich der Werkzeuganschluss 30, an dem ein hier nicht näher dargestelltes Werkzeug wie z.B. eine Baggerschaufel oder dergleichen angebracht werden kann. Auch dies ist an sich bekannt und muss ebenfalls nicht weiter erläutert werden.

Der Bagger 1 kann somit sowohl auf seinen Laufrädern 7 als auch auf seinen Schienenrädern 10 fahren. Fig. 1 zeigt einen ersten Fahrmodus, bei dem die Schienenräder 10 entsprechend weit angehoben sind, sodass der Bagger 1 ausschließlich mit seinen Laufrädern 7 auf einem Untergrund 8 fährt. Bei dem Untergrund 8 kann es sich z.B. um eine Straße, aber auch um eine aus Erde, Kies, Geröll und/oder dergleichen bestehende Oberfläche handeln.

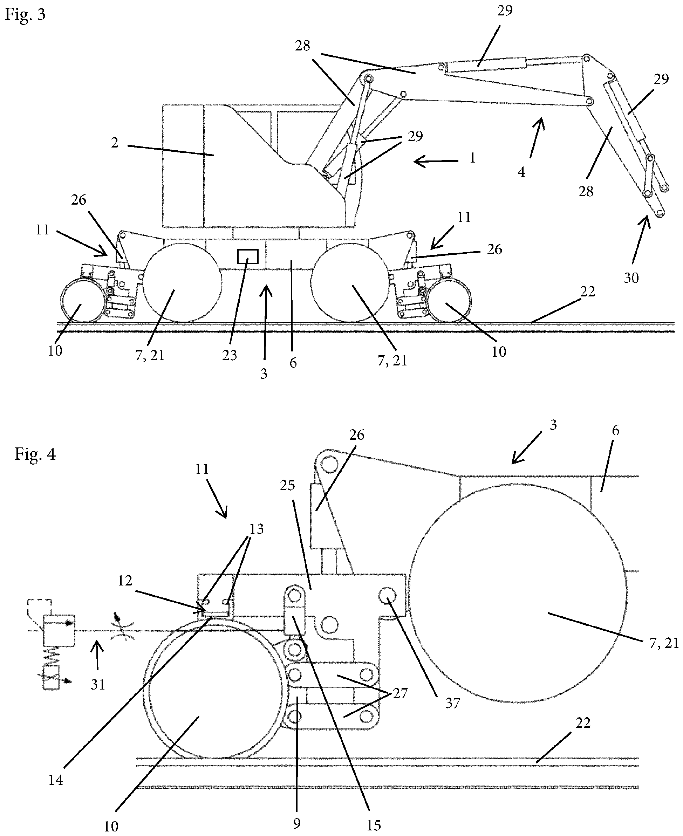

Fig. 2 zeigt hingegen einen anderen Fahrmodus, bei dem die Laufräder 7 so weit angehoben sind, dass sie in der Luft hängen. In dem Fahrmodus gemäß Fig. 2 fährt der Bagger 1 ausschließlich auf seinen Schienenrädern 10 auf den Eisenbahnschienen 22. Fig. 3 zeigt einen dritten Fahrmodus. Bei diesem ist vorgesehen, dass sowohl die Laufräder 7 als auch die Schienenräder 10 auf den Eisenbahnschienen 22 aufliegen und zum Fahren des Baggers 1 auf den Eisenbahnschienen 22 sowohl die Laufräder 7 von dem Laufradfahrantrieb 23 als auch die Schienenräder 10 von dem Schienenradfahrantrieb 24 angetrieben sind. Durch den direkten Kontakt der Laufräder 7 mit den Eisenbahnschienen 22 in diesem Fahrmodus gemäß Fig. 3 kann eine höhere Zugkraft übertragen werden. Dies kann insbesondere im Rangierbetrieb oder bei großen Höhenunterschieden, also größeren Steigungen der Eisenbahnschienen 22 von Vorteil sein.

Anhand von Fig. 4 und den nachfolgenden Figuren wird nun die erfindungsgemäße Ausbildung des Baggers 1 näher erläutert. In Fig. 4 ist gut zu sehen, dass die jeweilige Radträgeraufhängungen 11 jeweils zumindest eine in Abhängigkeit zumindest eines Betriebsparameters des Baggers 1 in ihrer Dämpfungswirkung geregelte Dämpfungseinrichtung 15 zur Dämpfung der relativen Vertikalbewegung zwischen dem jeweiligen Schienenradträger 9 und dem Fahrgestell 6 aufweisen. Bevorzugt ist dabei, wie eingangs bereits erläutert, vorgesehen, dass die Dämpfungseinrichtung 15 während des Betriebs des Baggers 1 immer eine Mindestdämpfung der relativen Vertikalbewegung zwischen dem jeweiligen Schienenradträger 9 und dem Fahrgestell 6 entgegensetzt. In bevorzugten Ausgestaltungsformen ist sogar vorgesehen, dass die relative Vertikalbewegung zwischen dem jeweiligen Schienenradträger 9 und dem Fahrgestell 6 mittels der Dämpfungseinrichtung 15 vollständig sperrbar ist. In diesem gesperrten Zustand ist dann der jeweilige Schienenradträger 9 mit seinen Schienenrädern 10 bei entsprechender Arretierung des Hub- und Senkantriebs 26 fix am Fahrgestell 6 befestigt. Dieser gesperrte Zustand kann z.B. dann durch eine entsprechende Erhöhung der Dämpfung der Dämpfungseinrichtung 15 eingestellt werden, wenn der Bagger 1 auf den Eisenbahnschienen 22 steht und im Stillstand des Baggers 1 entsprechende Arbeiten verrichtet werden. Der nicht gesperrte Zustand, in dem die Dämpfungseinrichtung 15 in geregelter Art und Weise eine entsprechende Dämpfungswirkung der relativen Vertikalbewegung zwischen dem jeweiligen Schienenradträger 9 und dem Fahrgestell 6 entgegensetzt, ist günstigerweise dann eingestellt, wenn der Bagger auf den Eisenbahnschienen 22 gefahren wird. Trifft der Bagger dann während dieses Fahrbetriebs auf Unebenheiten in den Eisenbahnschienen 22 oder wird sein Schwerpunkt z.B. durch Bewegen des Baggerarms 4 oder eine relative Verdrehung des Oberwagens 2 zum Unterwagen 3 verlagert, so lässt die Kompensationsvorrichtung 12 eine Relativbewegung zwischen Schienenradträger 9 und Fahrgestell 6 zu. Diese relative Vertikalbewegung wird aber durch die geregelte Dämpfungseinrichtung 15 bei der Erfindung so gedämpft, dass es nicht zu einer schlagartigen Verlagerung sondern eben zu einer an die jeweilige Situation angepassten gedämpften Vertikalbewegung kommt. Hierdurch kann ein Entgleisen der Schienenräder 10 besser als beim Stand der Technik vermieden werden.

Die Dämpfungseinrichtung 15 ist in bevorzugten, wie dem hier dargestellten Ausführungsbeispiel eine hydraulische Kolben-Zylinder-Einheit. Es kann sich aber auch um eine pneumatische Kolben-Zylinder-Einheit oder um eine ganz andere, z.B. elektrisch betriebene geeignete Dämpfungseinrichtung 15 handeln.

In Fig. 4 ist schematisiert eine Druckregelschaltung 31 dargestellt, mit der die Dämpfung der Dämpfungseinrichtung 15 dieses Ausführungsbeispiels geregelt werden kann. Solche Druckregelschaltungen 31 sind an sich bekannt und müssen nicht weiter erläutert werden. Welche Betriebsparameter des Baggers 1 zur Regelung der Dämpfungseinrichtung 15 mittels der Druckregelschaltung 31 herangezogen werden können, wird weiter hinten noch anschaulich anhand von Fig. 9 erläutert.

In Fig. 4 sieht man auch die Kompensationsvorrichtung 12 mit ihrem oberen Anschlag 13 und ihrem unteren Anschlag 14.

Fig. 5 zeigt im Wesentlichen dieselbe Situation wie Fig. 4, allerdings ist in Fig. 5 eines der Schienenräder 10 nicht dargestellt, sodass man den dahinterliegenden Kompensationsträger 33 und auch den Schienenradträger 9 besser sehen kann.

In den Fig. 4 und 5 sieht man gut, dass die jeweilige Radaufhängung 11 jeweils einen Zwischenträger 25 aufweist, welcher zum Anheben und Absenken des jeweiligen Schienenradträgers 9 relativ zum Fahrgestell 6 anhebbar und absenkbar am Fahrgestell 6 gelagert ist. Im hier gezeigten Ausführungsbeispiel wird dieses Anheben und Absenken des Zwischenträgers 25 relativ zum Fahrgestell 6 durch eine Schwenkbewegung realisiert, indem der Zwischenträger 25 um das Schwenkgelenk 37 schwenkbar am Fahrgestell 6 angelenkt ist. Dieses Anheben bzw. Absenken und konkret hier Verschwenken des Zwischenträgers 25 relativ zum Fahrgestell 6 erfolgt in diesem wie auch in anderen bevorzugten Ausgestaltungsformen mittels eines Hub- und Senkantriebs 26. Als Hub- und Senkantrieb 26 kommen alle hierzu geeigneten Antriebe grundsätzlich in Frage. Im gezeigten Ausführungsbeispiel wie auch in anderen bevorzugten Varianten handelt es sich beim Hub- und Senkantrieb 26 um einen vorzugsweise hydraulischen Kolben-Zylinder-Antrieb. Es können aber auch andere, wie z.B. elektrische Linearantriebe oder Schwenkantriebe oder pneumatische Antriebe zum Einsatz kommen. In bevorzugten Ausgestaltungsformen wie der hier realisierten, ist vorgesehen, dass der Zwischenträger 25 mittels des Hub- und Senkantriebs 26 auch in seiner Momentanposition relativ zum Fahrgestell 6 arretierbar ist. Auf diese Art und Weise können die Schienenräder 10 z.B. wie im Fahrmodus gemäß Fig. 1 angehoben und im angehobenen Zustand festgehalten werden. Mittels des Hub- und Senkantriebs 26 kann aber auch dafür gesorgt werden, dass die Schienenräder 10 auf die Eisenbahnschienen 22 abgesenkt sind und auf diesen aufliegen, so wie dies in den Fahrmodi gemäß Fig. 2 und 3 der Fall ist.

Zurückkommend auf die Fig. 4 und 5 sieht man, dass in bevorzugten Ausgestaltungsformen, wie der hier gezeigten, die Kompensationsvorrichtung 12, welche eine durch äußere Kräfte bewirkte relative Vertikalbewegung zwischen dem jeweiligen Schienenradträger 9 und dem Fahrgestell 6 ermöglicht und mittels der Anschläge 13 und 14 auch begrenzt, bevorzugt zwischen dem Zwischenträger 25 und dem Schienenradträger 9 wirkt. So ist in dem hier gezeigten Ausführungsbeispiel, wie insbesondere in Fig. 5 gut zu sehen ist, vorgesehen, dass der jeweilige Zwischenträger 25 mittels der jeweiligen Kompensationsvorrichtung 12 mit dem jeweiligen Schienenradträger 9 verbunden ist. Konkret ist hierzu, wie in Fig. 5 zu sehen, in diesem Ausführungsbeispiel vorgesehen, dass die Anschläge 13 und 14 der Kompensationsvorrichtung 12 mittels des Kompensationsträgers 33 an der Schienenradachse 32 der Schienenräder 10 gelagert sind. Die Schienenradachse 32 ist wiederum im Schienenradträger 9 gelagert. Alternativ könnte der Kompensationsträger 33 auch direkt als Teil des Schienenradträgers 9 ausgebildet sein. In diesem Fall wird der Schienenradträger 9 dann selbst die beiden Anschläge 13 und 14 der Kompensationsvorrichtung 12 aufweisen.

Zwischen den Anschlägen 13 und 14 ist jedenfalls im hier gezeigten Ausführungsbeispiel das Anschlagstück 34 in vertikaler Richtung bewegbar gelagert, wobei diese Vertikalbewegung durch den oberen Anschlag 13 und den unteren Anschlag 14 begrenzt ist. Das Anschlagstück 34 ist wiederum fix am Zwischenträger 25 befestigt. Die Kompensationsvorrichtung 12 wirkt in diesem Ausführungsbeispiel somit zwischen dem Zwischenträger 25 und dem Schienenradträger 9. Ist der Zwischenträger 25 dann im jeweiligen Betriebszustand vom Hub- und Senkantrieb 26 fix am Fahrgestell 6 gehalten, so wirkt die Kompensationsvorrichtung 12 letztendlich zwischen dem Schienenradträger 9 und dem Fahrgestell 6. Das Gleiche gilt in diesem Ausführungsbeispiel auch für die Dämpfungseinrichtung 15, welche hier einerseits am Zwischenträger 25 und andererseits am Schienenradträger 9 angelenkt ist. Zusätzlich ist der Schienenradträger 9 auch mittels der parallel zueinander angeordneten Schwenkhebel 27 bewegbar am Zwischenträger 25 gelagert. In bevorzugten, wie hier gezeigten, Ausgestaltungsformen bilden die Schwenkhebel 27, der Schienenradträger 9 und der Zwischenträger 25 ein Parallelogramm. Dies muss aber nicht zwingend so sein. Letztendlich geht es nur darum, dass der Schienenradträger 9 und der Zwischenträger 25, bzw. allgemein gesprochen der Schienenradträger 9 und das Fahrgestell 6, relativ zueinander bewegbar aneinander gelagert sind.

Fig. 6 zeigt nun in einer schematisierten Ansicht von vorne, wie der Unterwagen 3 und damit der gesamte Bagger 1 mit seinen Schienenrädern 10 über eben verlegte Eisenbahnschienen 22 fährt. In diesem Zustand liegen beide Anschlagstücke 34 auf den unteren Anschlägen 14 der jeweiligen

Kompensationsvorrichtungen 12 auf. Die die Schienenräder 10 tragende Schienenradachse 32 ist im Wesentlichen horizontal ausgerichtet. Im Hintergrund sieht man in Fig. 6 auch, wie die Laufräder 7 auf der Laufradachse 35 gelagert sind. Der an sich bekannte Panhardstab 36 sorgt für eine entsprechende Achsenseitenführung der Schienenradachse 32, wie dies an sich bekannt ist und nicht weiter erläutert werden muss.

Fig. 7 zeigt nun eine Situation, bei der die Schienenräder 10 auf eine unebene Stelle der Eisenbahnschienen 22 trifft. Man sieht gut, wie die Kompensationseinrichtung 12 eine einseitige, durch die Dämpfungseinrichtungen 15 gedämpfte, vertikale Auslenkung der Schienenradachse 32 und damit des Schienenradträgers 9 relativ zum Fahrgestell 6 zulassen, um so diese Unebenheit auszugleichen, ohne dass es zu einem Entgleisen der Schienenräder 11 kommt. Die Situation gemäß Fig. 7 ist in Fig. 8 noch einmal in einer Seitenansicht dargestellt.

Fig. 9 dient nun noch der Erläuterung, welche Betriebsparameter in bevorzugten Ausgestaltungsformen der Erfindung zur Regelung der Dämpfungseinrichtung 15 herangezogen werden können. Dabei ist, wie eingangs bereits erläutert, darauf hinzuweisen, dass diese Dämpfungseinrichtung 15 in Abhängigkeit eines, aber auch mehrerer Betriebsparameter geregelt werden kann. Einer dieser Betriebsparameter kann z.B. eine mittels Geschwindigkeitssensor 16 bestimmte Momentangeschwindigkeit des Unterwagens 3 sein. Dieser Geschwindigkeitssensor 16 kann z.B. die momentane Drehgeschwindigkeit eines Schienenrades 10 aufnehmen und daraus die Momentangeschwindigkeit des Baggers 1 berechnen.

Mittels des Drehwinkelerkennungssensors 17 kann aber auch als ein solcher Betriebsparameter zur Regelung der Dämpfungseinrichtung 15 der momentane Drehwinkel herangezogen werden, um welchen der Oberwagen 2 um die Drehachse 5 relativ zum Unterwagen 3 gedreht ist. Ein anderer solcher Betriebsparameter kann aber auch mittels entsprechender Auslenkungssensoren 18 bestimmt werden. Diese Auslenkungssensoren 18 geben wieder, welche momentane Auslenkung der Baggerarm 4 relativ zum Oberwagen 2 momentan aufweist. Bei entsprechend mehrgliedrigen Baggerarmen 4, wie in diesem Ausführungsbeispiel, ist dann auch eine entsprechende Anzahl von Auslenkungssensoren 18, wie in Fig. 9 dargestellt, vorhanden, um die momentane Stellung des gesamten Baggerarms 4, vorzugsweise samt hier nicht dargestelltem, am Werkzeuganschluss 30 befestigten Werkzeug, relativ zum Oberwagen 2 zu erfassen. Ein weiterer Betriebsparameter, welcher zur Regelung der Dämpfungseinrichtung 15 herangezogen werden kann, ist die momentan auf den Baggerarm 4 einwirkende Last. Diese kann durch an sich bekannte Lastsensoren 19 bestimmt werden. Im hier gezeigten Ausführungsbeispiel handelt es sich beim Lastsensor 19 um einen Drucksensor, welcher den momentanen Druck in dem Antriebszylinder 29 misst, welcher das an den Oberwagen 2 direkt anschließende Baggerarmglied 28 relativ zum Oberwagen 2 bewegt. Über einen solchen Lastsensor 19 kann die momentan auf dem Baggerarm 4 einwirkende Last bestimmt und so zur Regelung der Dämpfungseinrichtung 15 herangezogen werden. Dabei wird auch die vom hier nicht dargestellten, am Werkzeuganschluss 30 befestigten, Werkzeug hervorgerufene Last bzw. Laständerung mit bestimmt.

Besonders bevorzugte Varianten der Erfindung sehen vor, dass als Betriebsparameter zur Regelung der Dämpfungseinrichtung 15 die momentane Position des Schwerpunktes 20 des Baggers 1 herangezogen wird. Die momentane Position des Schwerpunkts 20 des Baggers 1 kann dann z.B. unter Zuhilfenahme der vom Drehwinkelerkennungssensor 17, den Auslenkungssensoren 18 und dem Lastsensor 19 gemessenen Daten berechnet und dann eben zur Regelung der Dämpfungseinrichtung 15 herangezogen werden.

### Legende zu den Hinweisziffern:

| | | | |
|---|---|---|---|
| 1 | Bagger | 29 | Antriebszylinder |
| 2 | Oberwagen | 30 | Werkzeuganschluss |
| 3 | Unterwagen | 31 | Druckregelschaltung |
| 4 | Baggerarm | 32 | Schienenradachse |
| 5 | Drehachse | 33 | Kompensationsträger |
| 6 | Fahrgestell | 34 | Anschlagstück |
| 7 | Laufrad | 35 | Laufradachse |
| 8 | Untergrund | 36 | Panhardstab |
| 9 | Schienenradträger | 37 | Schwenkgelenk |
| 10 | Schienenrad | | |
| 11 | Radträgeraufhängung | | |
| 12 | Kompensationsvorrichtung | | |
| 13 | oberer Anschlag | | |
| 14 | unterer Anschlag | | |
| 15 | Dämpfungseinrichtung | | |
| 16 | Geschwindigkeitssensor | | |
| 17 | Drehwinkelerkennungssensor | | |
| 18 | Auslenkungssensor | | |
| 19 | Lastsensor | | |
| 20 | Schwerpunkt | | |
| 21 | Luftbereifung | | |
| 22 | Eisenbahnschiene | | |
| 23 | Laufradfahrantrieb | | |
| 24 | Schienenradfahrantrieb | | |
| 25 | Zwischenträger | | |
| 26 | Hub- und Senkantrieb | | |
| 27 | Schwenkhebel | | |
| 28 | Baggerarmglied | | |

## Patentansprüche

1. Bagger (1) mit einem Oberwagen (2) und einem Unterwagen (3) und einem Baggerarm (4), wobei der Oberwagen (2) um eine Drehachse (5) drehbar auf dem Unterwagen (3) gelagert ist und der Baggerarm (4) relativ zum Oberwagen (2) bewegbar am Oberwagen (2) angelenkt ist und der Unterwagen (3) ein Fahrgestell (6) aufweist, an dem an zwei einander gegenüberliegenden Längsseiten des Unterwagens (3) jeweils zumindest zwei Laufräder (7) zum Befahren eines Untergrunds (8) gelagert sind, wobei der Unterwagen (3) zusätzlich zumindest zwei Schienenradträger (9) aufweist, wobei an den Schienenradträgern (9) jeweils einander gegenüberliegend zumindest zwei Schienenräder (10) zur Befahrung von Eisenbahnschienen (22) gelagert sind und die Schienenradträger (9) jeweils über eine Radträgeraufhängung (11) relativ zum Fahrgestell (6) anhebbar und absenkbar am Fahrgestell (6) gelagert sind und die Radträgeraufhängungen (11) jeweils zumindest eine Kompensationsvorrichtung (12) mit jeweils einem oberen Anschlag (13) und einem unteren Anschlag (14) aufweisen, wobei die Kompensationsvorrichtungen (12) eine, vom jeweiligen oberen Anschlag (13) und vom jeweiligen unteren Anschlag (14) begrenzte, durch äußere Kräfte bewirkte relative Vertikalbewegung zwischen dem jeweiligen Schienenradträger (9) und dem Fahrgestell (6) ermöglichen, **dadurch gekennzeichnet, dass** die Radträgeraufhängungen (11) jeweils zumindest eine, in Abhängigkeit zumindest eines Betriebsparameters des Baggers (1) in ihrer Dämpfungswirkung geregelte Dämpfungseinrichtung (15) zur Dämpfung der relativen Vertikalbewegung zwischen dem jeweiligen Schienenradträger (9) und dem Fahrgestell (6) aufweisen.

2. Bagger (1) nach Anspruch 1, wobei die
Dämpfungseinrichtung (15) während eines Betriebs des Baggers (1) immer eine Mindestdämpfung der relativen Vertikalbewegung zwischen dem jeweiligen Schienenradträger (9) und dem Fahrgestell (6) entgegensetzt.

3. Bagger (1) nach Anspruch 1 oder 2, wobei die relative Vertikalbewegung zwischen dem jeweiligen Schienenradträger (9) und dem Fahrgestell (6) mittels der Dämpfungseinrichtung (15) vollständig sperrbar ist.

4. Bagger (1) nach einem der Ansprüche 1 bis 3, wobei die Dämpfungseinrichtung (15) eine hydraulische oder pneumatische Kolben-Zylinder-Einheit ist.

5. Bagger (1) nach einem der Ansprüche 1 bis 4, wobei der oder einer der Betriebsparameter zur Regelung der Dämpfungseinrichtung (15) eine, mit einem Geschwindigkeitssensor (16) bestimmte, Momentangeschwindigkeit des Unterwagens (3) ist.

6. Bagger (1) nach einem der Ansprüche 1 bis 5, wobei der oder einer der Betriebsparameter zur Regelung der Dämpfungseinrichtung (15) ein, mit einem Drehwinkelerkennungssensor (17) bestimmter, momentaner Drehwinkel ist, um welchen der Oberwagen (2) um die Drehachse (5) relativ zum Unterwagen (3) gedreht ist.

7. Bagger (1) nach einem der Ansprüche 1 bis 6, wobei der oder einer der Betriebsparameter zur Regelung der Dämpfungseinrichtung (15) eine, mit zumindest einem Auslenkungssensor (18) bestimmte, momentane Auslenkung des Baggerarms (4) relativ zum Oberwagen (2) ist.

8. Bagger (1) nach einem der Ansprüche 1 bis 7, wobei der oder einer der Betriebsparameter zur Regelung der Dämpfungseinrichtung (15) eine, mit zumindest einem Lastsensor (19) bestimmte, momentan auf den Baggerarm (4) einwirkende Last ist.

9. Bagger (1) nach einem der Ansprüche 1 bis 8, wobei der oder einer der Betriebsparameter zur Regelung der Dämpfungseinrichtung (15) eine momentane Position des Schwerpunkts (20) des Baggers (1) ist.

10. Bagger (1) nach einem der Ansprüche 1 bis 9, wobei die Laufräder (7) jeweils eine Luftbereifung aufweisen.

11. Bagger (1) nach einem der Ansprüche 1 bis 10, wobei zumindest eines der, vorzugsweise alle, Laufräder (7) zum Fahren des Baggers (1) auf dem Untergrund (8) oder auf den Eisenbahnschienen (22) mittels zumindest eines Laufradfahrantriebs (23) des Baggers (1) antreibbar ist bzw. sind, und/oder dass zumindest eines der, vorzugswiese alle, Schienenräder (10) zum Fahren des Baggers (1) auf den Eisenbahnschienen (22) mittels zumindest eines Schienenradfahrantriebs (24) des Baggers (1) antreibbar ist bzw. sind.

12. Bagger (1) nach einem der Ansprüche 1 bis 11, wobei der Bagger (1) einen Fahrmodus aufweist, bei dem sowohl die Laufräder (7) als auch die Schienenräder (10) auf den Eisenbahnschienen (22) aufliegen und zum Fahren des Baggers (1) auf den Eisenbahnschienen (22) sowohl die Laufräder (7) von dem bzw. zumindest einem Laufradfahrantrieb (23) als auch die Schienenräder (10) von dem bzw. zumindest einem Schienenradfahrantrieb (24) angetrieben sind.

13. Bagger (1) nach einem der Ansprüche 1 bis 12, wobei die jeweilige Radträgeraufhängung (11) jeweils einen Zwischenträger (25) aufweist, welcher zum Anheben und Absenken des jeweiligen Schienenradträgers (9) relativ zum Fahrgestell (6), vorzugsweise mittels Schwenkbewegung, anhebbar und absenkbar am Fahrgestell (6) gelagert ist.

14. Bagger (1) nach Anspruch 13, wobei der jeweilige Zwischenträger (25) jeweils mittels eines Hub- und Senkantriebs (26), vorzugsweise mittels Schwenkbewegung, anhebbar und absenkbar am Fahrgestell (6) gelagert ist, wobei vorzugsweise vorgesehen ist, dass der Zwischenträger (25) mittels des Hub- und Senkantriebs (26) auch in seiner Momentanposition relativ zum Fahrgestell (6) arretierbar ist.

15. Bagger (1) nach Anspruch 13 oder 14, wobei der jeweilige Zwischenträger (25) mittels der jeweiligen Kompensationsvorrichtung (12) mit dem jeweiligen Schienenradträger (9) verbunden ist, und/oder wobei der jeweilige Zwischenträger (25) mittels der jeweiligen Dämpfungseinrichtung (15) mit dem jeweiligen Schienenradträger (9) verbunden ist, und/oder wobei der jeweilige Zwischenträger (25) mittels zumindest einem Schwenkhebel (27) mit dem jeweiligen Schienenradträger (9) verbunden ist.
